# EUROPEAN PATENT APPLICATION

(11) **EP 3 657 416 A1**
(43) Date of publication of application: **27.05.2020**
(21) Application number: 18893214.9
(22) Date of filing: 30.10.2018
(51) Int. Cl.: G06Q 20/06

(54) **AUGMENTED REALITY-BASED VIRTUAL OBJECT ALLOCATION METHOD AND APPARATUS**

(30) Priority: 20.12.2017 CN 201711387928
(71) Applicant: ALIBABA GROUP HOLDING LIMITED, George Town, Grand Cayman (KY)
(72) Inventor: DUAN, Qinglong, Hangzhou, Zhejiang 311121 (CN)
(74) Representative: Goddar, Heinz J.
(86) International application number: PCT/CN2018/112552
(87) International publication number: WO 2019/119977

(57) **Abstract**

An augmented reality-based virtual object allocation method is disclosed, is applied to an augmented reality client, and includes: performing image scanning on a target user, and initiating face recognition for a scanned image; obtaining, when a facial feature is recognized from the scanned image, an electronic certificate sent by an augmented reality server, and locally storing the obtained electronic certificate, where the electronic certificate is used to obtain a virtual object; determining whether the number of types of locally stored electronic certificates reaches a predetermined threshold; and sending a virtual object allocation request to the augmented reality server if the number of types of locally stored electronic certificates reaches the predetermined threshold, where the virtual object allocation request includes electronic certificates whose number of types is the predetermined threshold, so that the augmented reality server allocates a virtual object from a predetermined virtual object set based on the virtual object allocation request.

## Description

### TECHNICAL FIELD

The present specification relates to the field of augmented reality, and in particular, to an augmented reality-based virtual object allocation method and apparatus.

### BACKGROUND

With development of network technologies, various virtual object allocation methods emerge. Allocation of virtual objects in a form of "red packet" is used as an example. Users can put e-cards, cash gifts, etc. to "red packet", and then send the "red packet" to a certain user, or send the "red packet" to a group for collection by members in the group. However, with increasing richness of virtual object allocation scenarios, how to improve interaction and interestingness during virtual object allocation is of great significance in improving user experience.

### SUMMARY

The present specification provides an augmented reality-based virtual object allocation method, applied to an augmented reality client, where the method includes:

performing image scanning on a target user, and initiating face recognition for a scanned image; obtaining, when a facial feature is recognized from the scanned image, an electronic certificate sent by an augmented reality server, and locally storing the obtained electronic certificate, where the electronic certificate is used to obtain a virtual object; determining whether the number of types of locally stored electronic certificates reaches a predetermined threshold; and sending a virtual object allocation request to the augmented reality server if the number of types of locally stored electronic certificates reaches the predetermined threshold, where the virtual object allocation request includes electronic certificates whose number of types is the predetermined threshold, so that the augmented reality server allocates a virtual object from a predetermined virtual object set based on the virtual object allocation request.

The present specification further provides an augmented reality-based virtual object allocation method, applied to an augmented reality server, where the method includes: determining, when an augmented reality client performs image scanning on a target user, whether a facial feature is recognized from an image scanned by the augmented reality client; sending an electronic certificate to the augmented reality client if the facial feature is recognized from the scanned image, where the electronic certificate is used to obtain a virtual object; receiving an object allocation request sent by the augmented reality client, where the object allocation request includes several electronic certificates used to obtain a service object; determining whether the number of types of electronic certificates included in the object allocation request reaches a predetermined threshold; and allocating a virtual object to the virtual reality client from a predetermined virtual object set if the number of types of electronic certificates included in the object allocation request reaches the predetermined threshold.

The present specification further provides an augmented reality-based virtual object allocation apparatus, applied to an augmented reality client, where the apparatus includes: a scanning module, configured to perform image scanning on a target user, and initiate face recognition for a scanned image; an acquisition module, configured to obtain, when a facial feature is recognized from the scanned image, an electronic certificate sent by an augmented reality server, and locally store the obtained electronic certificate, where the electronic certificate is used to obtain a virtual object; a first determining module, configured to determine whether the number of types of a sending module, configured to send a virtual object allocation request to the augmented reality server if the number of types of locally stored electronic certificates reaches the predetermined threshold, where the virtual object allocation request includes electronic certificates whose number of types is the predetermined threshold, so that the augmented reality server allocates a virtual object from a predetermined virtual object set based on the virtual object allocation request.

The present specification further provides an augmented reality-based virtual object allocation apparatus, applied to an augmented reality server, where the apparatus includes: a second determining module, configured to determine, when an augmented reality client performs image scanning on a target user, whether a facial feature is recognized from an image scanned by the augmented reality client; a sending module, configured to send an electronic certificate to the augmented reality client if the facial feature is recognized from the scanned image, where the electronic certificate is used to obtain a virtual object; a receiving module, configured to receive an object allocation request sent by the augmented reality client, where the object allocation request includes several electronic certificates used to obtain a service object; a third determining module, configured to determine whether the number of types of electronic certificates included in the object allocation request reaches a predetermined threshold; and an allocation module, configured to allocate a virtual object to the virtual reality client from a predetermined virtual object set if the number of types of electronic certificates included in the object allocation request reaches the predetermined threshold.

In the present specification, a new interactive mode in which an online demand of allocating a virtual object to a user is combined, based on an augmented reality technology, with offline face image scanning and face recognition performed by the user by using an augmented reality client. The user can perform image scanning on a target user by using the augmented reality client, and initiate face recognition on a scanned image. When a facial feature is recognized from the scanned image, an augmented reality server can be triggered to send an electronic certificate used to obtain a virtual object to the augmented reality client, and the user can collect, by using the augmented reality client, the electronic certificate sent by the augmented reality server. When the number of types of electronic certificates collected by the user reaches a predetermined threshold, the user can receive access to virtual object allocation. The augmented reality client can actively send a virtual object allocation request to the augmented reality server, and add electronic certificates whose number of types is the predetermined threshold to the virtual object allocation request, so that the augmented reality server allocates an object to the user from a predetermined virtual object set, thereby improving interaction and interestingness of virtual object allocation.

### BRIEF DESCRIPTION OF DRAWINGS

FIG. 1 is a processing flowchart illustrating an augmented reality-based virtual object allocation method, according to an implementation of the present specification;
FIG. 2 is a schematic diagram illustrating an image scanning interface of an AR client, according to an implementation of the present specification;
FIG. 3 is another schematic diagram illustrating an image scanning interface of an AR client, according to an implementation of the present specification;
FIG. 4 is a schematic diagram illustrating displaying an obtained virtual blessing card by an AR client, according to an implementation of the present specification;
FIG. 5 is another schematic diagram illustrating displaying an obtained virtual blessing card by an AR client, according to an implementation of the present specification;
FIG. 6 is a schematic diagram illustrating receiving access to a red packet by a user by using an AR client, according to an implementation of the present specification;
FIG. 7 is a logical block diagram illustrating an augmented reality-based virtual object allocation apparatus, according to an implementation of the present specification;
FIG. 8 is a structural diagram of hardware in an augmented reality client that includes an augmented reality-based virtual object allocation apparatus, according to an implementation of the present specification;
FIG. 9 is another logical block diagram illustrating an augmented reality-based virtual object allocation apparatus, according to an implementation of the present specification; and
FIG. 10 is another structural diagram of hardware in an augmented reality server that includes an augmented reality-based virtual object allocation apparatus, according to an implementation of the present specification.

### DESCRIPTION OF IMPLEMENTATIONS

The present specification is intended to provide a new interactive mode in which an online demand of allocating a virtual object to a user is combined, based on an augmented reality technology, with offline face image scanning and face recognition performed by the user by using an augmented reality client.

In implementation, the user can perform image scanning on a facial area of a target user by using the AR client, and the AR client initiates face recognition for a scanned image.

When a facial feature is recognized from the scanned image, an AR server can be triggered to send an electronic certificate used to obtain a virtual object to the AR client, and the user can collect, by using the AR client, the electronic certificate sent by the AR server.

Further, when the number of types of electronic certificates collected by the user reaches a predetermined threshold, the user can receive access to virtual object allocation, and the AR client can actively send a virtual object allocation request that includes several electronic certificates to the AR server, where the number of types of included electronic certificates is the predetermined threshold, so that the AR server allocates a virtual object to the user from a predetermined virtual object set.

In the previous technical solutions, the user can perform image scanning on a facial area of the user or another user by using an image scanning function included in the AR client, to trigger the AR server to allocate an electronic certificate used to obtain a virtual object to the user, and receive access to virtual object allocation by collecting the electronic certificate, thereby improving interaction and interestingness of virtual object allocation.

For example, the previous "virtual object" is a "virtual red packet" in a red packet sending scenario. The user can perform image scanning on the facial area of the user or the another user by using the AR client, to trigger the AR server to send an electronic certificate used to obtain a red packet to the AR client, and collect, by using the AR client, the electronic certificate sent by the AR server. When the number of types of electronic certificates collected by the user reaches the predetermined threshold, the user can receive access to red packet allocation. The AR client can actively send a red packet allocation request that includes several electronic certificates to the AR server, where the number of types of included electronic certificates is the predetermined threshold, and the AR server sends a red packet of a certain amount of money to the user from a predetermined "red packet fund pool", thereby improving interaction and interestingness of red packet sending.

The following describes the present specification by using specific implementations and with reference to specific application scenarios.

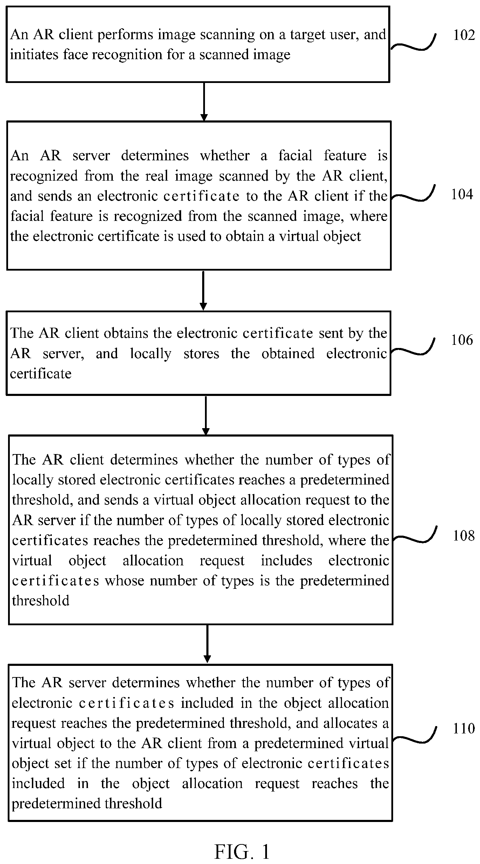

FIG. 1 illustrates an augmented reality-based virtual object allocation method, according to an implementation of the present specification. The method includes the following steps.

Step 102: An AR client performs image scanning on a target user, and initiates face recognition for a scanned image.

Step 104: An AR server determines whether a facial feature is recognized from the real image scanned by the AR client, and sends an electronic certificate to the AR client if the facial feature is recognized from the scanned image, where the electronic certificate is used to obtain a virtual object.

Step 106: The AR client obtains the electronic certificate sent by the AR server, and locally stores the obtained electronic certificate.

Step 108: The AR client determines whether the number of types of locally stored electronic certificates reaches a predetermined threshold, and sends a virtual object allocation request to the AR server if the number of types of locally stored electronic certificates reaches the predetermined threshold, where the virtual object allocation request includes electronic certificates whose number of types is the predetermined threshold.

Step 110: The AR server determines whether the number of types of electronic certificates included in the object allocation request reaches the predetermined threshold, and allocates a virtual object to the AR client from a predetermined virtual object set if the number of types of electronic certificates included in the object allocation request reaches the predetermined threshold.

The AR client refers to client software developed based on an AR technology or integrated with an AR function. For example, the AR client can be an ALIPAY client (ALIPAY) integrated with an AR service function. The AR client can include an image scanning function, perform image scanning on a real scenario or a person in an offline environment, perform, by using a front-end AR engine of the AR client, visual rendering on virtual data (for example, some dynamic pictures customized by an operator) pushed by the back-end AR server, and augment the virtual data using specific features (for example, the facial features or some predetermined offline graphic identifiers) recognized from the scanned image data.

The AR server is a server, a server cluster, or a cloud platform constructed based on a server cluster, that provides a service for the AR client. For example, the AR server can be a payment platform that provides an interconnection service for an ALIPAY APP integrated with the AR service function. The AR server can perform, based on a back-end AR engine, image recognition on the image scanned by the AR client (certainly, the image recognition process can alternatively be completed by the AR client based on the front-end AR engine), perform content management on virtual data related to an offline service, and push related virtual data to the AR client based on an image recognition result. For example, the AR server can locally perform content management on a pre-configured electronic certificate used to obtain a virtual object, and can push and send the electronic certificate to the AR client based on the image recognition result.

The virtual object can include any type of virtual article that can be allocated and sent online. For example, in a shown implementation, the virtual object can be a "virtual red packet" in a red packet sending scenario.

The electronic certificate can include any form of virtual certificate used to obtain a virtual object from the AR server. In practice, a specific quantity of electronic certificates of different types can be preconfigured on the AR server, and different types of electronic certificates are sent to a specific user group based on a specific sending rule. A specific form of the electronic certificate is not limited, and the electronic certificate can be a character string, a number, a character, a command, a virtual card, etc.

The following provides detailed description by using an example in which the virtual object is a "virtual red packet".

The example in which the virtual object is a "virtual red packet" is merely an example. In practice, other than the "virtual red packet", the virtual object can alternatively be another form of virtual object that can be allocated and sent online, for example, an electronic certificate, an electronic shopping voucher, an electronic coupon, etc.

In this example, a specific quantity of electronic certificates of different types can be preconfigured on the AR server. The user can perform image scanning on a facial area of the user or another user by using the AR client, and the AR client initiates face recognition for the scanned image, and when the facial feature is recognized from the scanned image, the AR server is triggered to send the electronic certificate used to obtain a virtual object to the AR client.

The user can collect, by using the AR client, the electronic certificate sent by the AR server. When the number of types of electronic certificates collected by the user reaches the predetermined threshold, the user can receive access to virtual object allocation. The AR client can actively send a red packet allocation request that includes several electronic certificates to the AR server, where the number of types of electronic certificates reaches the predetermined threshold, and the AR server sends a red packet of a certain amount of money from a preset "red packet fund pool" to the user.

For example, in a shown red packet sending scenario of "collect five blessings for a prize", the electronic certificate can include five types of virtual blessing cards (including, for example, a "healthy blessing", a "friendly blessing", a "prosperous blessing", a "peaceful blessing", and a "wealthy blessing"). The user can perform, by using the AR client, image scanning on the facial area of the user or another user to participate in "blessing card collection for prize drawing", to trigger the AR server to send a virtual blessing card to the AR client, and collect, by using the AR client, the virtual blessing card sent by the AR server. The user receives access to red packet collection after collecting the five types of shown virtual blessing cards, and the AR server sends a red packet to the user.

The following describes the technical solutions of the present specification in detail with reference to three phases: "collection of an electronic certificate", "verification of the number of types of electronic certificates", and "sending of a red packet".

### (1) "Collection of an electronic certificate"

In an initial state, a specific quantity of electronic certificates of different types can be preconfigured on the AR server, and the AR server manages all the preconfigured electronic certificates.

The preconfigured electronic certificate is the only certificate for the user to receive access to red packet sending. The number of preconfigured electronic certificates and the number of types of preconfigured electronic certificates can be set based on an actual demand.

In addition to preconfiguring the specific quantity of electronic certificates of different types on the AR server, a corresponding sending condition can be bound to the preconfigured electronic certificate on the AR server.

In this example, the sending condition can include whether the facial feature is recognized from an image scanned by the AR client. The AR server can immediately send the electronic certificate to the AR client provided that the facial feature is recognized from the image scanned by the AR client.

In this case, the user can perform, by using the image scanning function included in the AR client, image scanning on the facial area of the user or the another user, to trigger the AR server to send the electronic certificate to the AR client, and collect, by using the AR client, the electronic certificate sent by the AR server, to receive access to red packet sending.

In implementation, the AR client can provide a function option of the image scanning function for the user by default. For example, the function option can be a "scan" function button provided for the user on a user home page of the AR client. When needing to perform image scanning on the facial area of the user or the another user by using the AR client, the user can trigger the function option through "tapping", to enter an image scanning interface of the AR client.

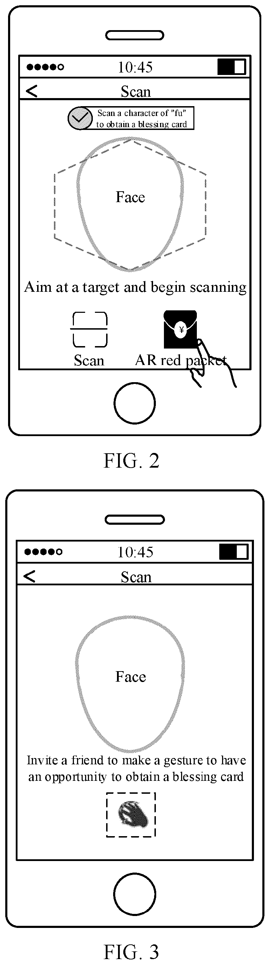

FIG. 2 is a schematic diagram illustrating the image scanning interface of the AR client, according to this example.

As shown in FIG. 2, on the image scanning interface of the AR client, in addition to the conventional function button of "scan", a function button of "AR red packet" can be provided for the user. The user can trigger the function button through "tapping", and enter the image scanning interface of the AR client to complete an image scanning operation on the facial area of the user or the another user. The image scanning interface can be a real-time scanning interface, to be specific, a background photo on the image scanning interface can present a face image of a scanned user in real time.

Referring back to FIG. 2, after entering the image scanning interface shown in FIG. 2, the AR client can further output a face scanning prompt on the image scanning interface.

The face scanning prompt can include a scanning box used to prompt the user to perform image scanning on the facial area, and a prompt text statically displayed on the image scanning interface.

As shown in FIG. 2, the face scanning prompt can include a scanning box that is in a face shape and that is displayed in the middle of a picture, and a prompt text that is statically and permanently output below the scanning box and that is of "aiming at a target and beginning scanning".

Content of the prompt text can be dynamically updated in practice. For example, when the AR client scans the facial area, the prompt text can be updated to "recognizing the face". When the AR client fails to recognize the facial feature from the scanned image by using an included face recognition algorithm or by using the AR server, the prompt text can be updated to "keep the lens still", "try again", "try another one", or another similar text prompt for prompting the user to try again.

After the AR client outputs the image scanning prompt on the image scanning interface, the user can make a camera included in an AR end-user device (for example, a smartphone or a pair of AR glasses) that the AR client is located in aim at the facial area of the user or the another user. The AR client can perform real-time image scanning by invoking the camera included in the AR end-user device, and initiate face recognition for the scanned image.

When performing face recognition on the scanned image, the AR client can complete the face recognition based on a face recognition model included in the AR client, or can upload the scanned image to the AR server in real time, and the AR server completes the face recognition based on a face recognition model locally included in the AR server.

In a shown implementation, the AR client can locally include the face recognition model, and after scanning the image by invoking the camera of the AR end-user device, can continue to invoke the face recognition model to perform face recognition on the scanned image, and upload a recognition result to the AR server.

In another shown implementation, the AR client may not locally include the face recognition model, but upload the scanned image to the AR server in real time. The AR server performs face recognition on the image based on the face recognition model locally included in the AR server, and then returns a recognition result to the AR client.

It is worthwhile to note that an image recognition algorithm included in the face recognition model is not limited in this implementation. A person skilled in the art can refer to description in related technologies when implementing the technical solutions of the present specification. For example, in an implementation, the face recognition model can be a deep learning model trained based on a neural network with reference to a large quantity of face image samples.

After the facial feature is recognized from the image scanned by the AR client, to improve interaction, the AR client can enhance display of a predetermined dynamic picture at a position corresponding to the scanned facial feature, to prompt the user that the facial feature is currently scanned from the scanned image. For example, in an implementation, display of a corresponding pattern or decoration can be enhanced around the scanned facial feature.

In this case, the AR client can obtain the preconfigured dynamic picture, then perform visual rendering on the dynamic picture based on the front-end AR engine of the AR client, and augment the dynamic picture and the currently recognized facial feature at the corresponding position on the image scanning interface based on the recognized facial feature, to enhance display for the user.

It is worthwhile to note that the dynamic picture can be preconfigured on the AR client, or can be dynamically sent by the AR server. Implementations are not limited in the present specification.

After face recognition on the image scanned by the AR client is completed, the AR server can further determine, based on the recognition result, whether the facial feature is recognized from the real image scanned by the AR client. If determining that the facial feature is successfully recognized from the image scanned by the AR client, the AR server can send a corresponding electronic certificate to the AR client from the preconfigured electronic certificates.

For example, in an implementation, when sending the electronic certificate to the AR client, the AR server can randomly send the electronic certificate to the AR client from the locally preconfigured electronic certificates. In another implementation, different from the random sending method, the AR server can send, based on a predetermined sending rule, the electronic certificate to the AR client from the locally preconfigured electronic certificates.

It is worthwhile to note that when sending the electronic certificate to the AR client, the AR server can directly send the electronic certificate to the AR client, or can send only a unique identifier corresponding to the electronic certificate to the AR client, and store a mapping relationship between the unique identifier and the electronic certificate on the AR client. Subsequently, the AR client can recognize the corresponding electronic certificate by using the unique identifier.

For example, assuming that the electronic certificate is a virtual card. In this case, the server can directly send the virtual card to the AR client, or can generate a unique corresponding identifier for the virtual card, and send the identifier to the AR client. After receiving the identifier, the AR client can render, based on the stored mapping relationship, the identifier to the corresponding virtual card, and locally display the virtual card.

In this example, in addition to whether the facial feature is recognized from the image scanned by the AR client, in practice, to improve interaction and security of electronic certificate sending, a mechanism such as gesture recognition or expression recognition can be introduced into the sending condition based on face recognition. To be specific, after the facial feature is recognized from the image scanned by the AR client, expression recognition or gesture recognition on the scanned image can be further initiated, and the AR server can send the electronic certificate to the AR client only after a predetermined gesture or a predetermined expression is further recognized from the scanned image.

In a shown implementation, based on face recognition, the gesture recognition mechanism can be further introduced. In this case, after the facial feature is recognized from the image scanned by the AR client, the AR client can further output a gesture scanning prompt on the image scanning interface.

The gesture scanning prompt is used to prompt the user to make a predetermined gesture, and can include a gesture image corresponding to a gesture predetermined by the AR server and a prompt text statically displayed on the image scanning interface.

A specific type of the predetermined gesture is not limited in the present specification. In practice, the specific type of the predetermined gesture can be customized based on an actual interaction demand. For example, in an implementation, the predetermined gesture can be a gesture of waving before a lens by the user.

FIG. 3 is another schematic diagram illustrating the image scanning interface of the AR client, according to this example.

As shown in FIG. 3, in an example, the electronic certificate is a "virtual blessing card". The gesture scanning prompt can include a text prompt that is displayed below a picture and that is of "invite a friend to make a gesture to have an opportunity to obtain a blessing card", and a gesture photo that is displayed below the text prompt and that corresponds to the predetermined gesture.

After the AR client outputs the gesture scanning prompt on the image scanning interface, the scanned user can make, under prompt of the gesture scanning prompt, the corresponding gesture before the lens of the camera included in the AR end-user device that the AR client is located in. The AR client can perform real-time image scanning by invoking the camera included in the AR end-user device, and initiate gesture recognition for the scanned image.

When performing gesture recognition on the scanned image, the AR client can complete the gesture recognition based on a gesture recognition model included in the AR client, or can upload the scanned image to the AR server in real time, and the AR server completes the gesture recognition based on a gesture recognition model locally included in the AR server. Details are omitted here for simplicity.

In addition, an image recognition algorithm included in the gesture recognition model is not limited in this example. A person skilled in the art can refer to description in related technologies when implementing the technical solutions of the present specification.

After gesture recognition on the image scanned by the AR client is completed, the AR server can further determine, based on a recognition result, whether the predetermined gesture is recognized from the real image scanned by the AR client. If determining that the predetermined gesture is successfully recognized from the image scanned by the AR client, the AR server can send the corresponding electronic certificate to the AR client from the preconfigured electronic certificates.

In another shown implementation, based on face recognition, an expression recognition mechanism can be further introduced. In this case, after recognizing the facial feature from the image scanned by the AR client, the AR client can further output an expression scanning prompt on the image scanning interface.

The expression scanning prompt is used to prompt the user to make a predetermined expression, and can include an expression image that corresponds to the predetermined expression and that is predetermined by the AR server, and a prompt text statically displayed on the image scanning interface.

Certainly, for some conventional expressions (for example, a smile expression), the expression scanning prompt can include only a statically displayed prompt text.

The predetermined expression is not limited in the present specification. In practice, the predetermined expression can be customized based on an actual interaction demand.

For example, the electronic certificate is a "virtual blessing card", and the predetermined expression is a smile expression. The expression scanning prompt can include a text prompt that is displayed below a picture and that is of "invite a friend to make a smile gesture to have an opportunity to obtain a blessing card", and a predetermined smile photo displayed below the text prompt.

After the AR client outputs the expression scanning prompt on the image scanning interface, the scanned user can make, under prompt of the expression scanning prompt, the corresponding expression before the lens of the camera included in the AR end-user device that the AR client is located in. The AR client can perform real-time image scanning by invoking the camera included in the AR end-user device, and initiate expression recognition for the scanned image.

When performing expression recognition on the scanned image, the AR client can complete the expression recognition based on an expression recognition model included in the AR client, or the AR client can upload the scanned image to the AR server in real time, and the AR server completes the expression recognition based on an expression recognition model locally included in the AR server. Details are omitted here for simplicity.

In addition, an image recognition algorithm included in the expression recognition model is not limited in this example. A person skilled in the art can refer to description in related technologies when implementing the technical solutions of the present specification. For example, the predetermined expression is a smile expression, and an image recognition algorithm used to recognize a smile expression can be included in the AR client or the AR server in advance.

After expression recognition on the image scanned by the AR client is completed, the AR server can further determine, based on a recognition result, whether the predetermined expression is recognized from the real image scanned by the AR client. If determining that the predetermined expression is successfully recognized from the image scanned by the AR client, the AR server can send the corresponding electronic certificate to the AR client from the preconfigured electronic certificates.

Based on face recognition, the gesture recognition mechanism or the expression recognition mechanism is further introduced.

In this case, after gesture recognition or expression recognition is further introduced, the user can trigger the AR server to send the electronic certificate to the user only after the predetermined gesture or expression is made before the lens of the camera included in the AR end-user device. Therefore, interaction between the user and the AR server can be improved.

In addition, after gesture recognition or expression recognition is further introduced, it is equivalent to performing liveness detection on the scanned user, and therefore a case in which the electronic certificate sent by the AR server is obtained by scanning some face images by using the AR client can be avoided, thereby improving fairness of electronic certificate sending.

In this example, to prevent the electronic certificate from being imitated, when sending the electronic certificate to the AR client, the AR server can further encrypt the electronic certificate by using a predetermined encryption algorithm. After receiving the encrypted electronic certificate, the AR client can decrypt the electronic certificate by using a decryption key corresponding to the encryption algorithm. As such, the electronic certificate can be prevented from being imitated by the user.

It is worthwhile to note that the number of types of electronic certificates sent by the AR server to the AR client can be less than the predetermined threshold.

For example, the electronic certificate is a virtual card. Assuming that the user needs to collect five different types of virtual cards to receive access to virtual red packet allocation. In this case, when the server sends the virtual card to the AR client, the number of types of sent virtual cards can be a number less than 5, for example, 3. As such, the number of users with access to red packet allocation can be effectively controlled.

In addition, it is worthwhile to note that the sending rule used by the server to send the electronic certificate to the AR client can be customized based on an actual demand.

In a shown implementation, the sending rule can include selected sending for a specific user group.

For example, in an implementation, the AR server can preferentially send the electronic certificate to a user with relatively high activeness. Alternatively, the AR server can preferentially send a relatively small quantity of electronic certificates to a user with relatively high activeness.

As such, it is easier for the user with relatively high activeness to obtain the electronic certificate or a relatively "rare" electronic certificate. Therefore, the user with high activeness is more likely to receive access to virtual object acquisition.

It is worthwhile to note that when the AR server calculates activeness of the user, the activeness can be represented based on parameters related to the activeness of the user. For example, in practice, a larger quantity of friends of the user or a larger quantity of services initiated by the user indicates higher activeness of the user. Therefore, the parameters can include parameters such as the number of friends of the user or the number of initiated services. When calculating the activeness of the user, the AR server can count the number of friends of the user or count the number of services initiated by the user, and then perform thresholding processing to determine whether the user is an active user.

Certainly, in practice, different from the method in which the user collects the electronic certificate by performing image scanning on the facial area of the user or the another user by using the AR client to trigger the AR server to send the electronic certificate to the AR client, the user can alternatively collect the electronic certificate by obtaining an electronic certificate shared by another user by using the same AR client.

For example, the electronic certificate is a virtual card. The AR client can be an ALIPAY client integrated with an AR service function, and the ALIPAY client can provide a sharing interface. The another user can share the virtual card with the user in the ALIPAY client by using the ALIPAY client of the another user. Alternatively, the virtual card can be shared with a third-party social platform or instant messaging software in a form of a link or a clickable picture/text through the sharing interface provided by the ALIPAY client. After receiving the virtual card shared by the another user, the user can jump to an interface of the ALIPAY client by clicking the link or the picture/text, and then collect and locally store the virtual card shared by the another user.

In this example, after the AR client obtains, by scanning the facial area of the user or the another user, the electronic certificate sent by the AR server, to improve interaction, the AR client can enhance display of a predetermined dynamic picture at a position corresponding to the scanned facial feature, to prompt the user that the electronic certificate is currently obtained.

For example, in an implementation, the predetermined dynamic picture can be repeatedly played around the scanned facial feature. For example, the electronic certificate is a virtual blessing card. In this case, a head position of the scanned user can be determined based on the scanned facial feature, a corresponding holiday crown is "worn" at the head position of the scanned user, and an animation effect of blessing card falling from heaven is dynamically played around the face of the user.

In addition, after the dynamic picture used to prompt the user that the electronic certificate is obtained is displayed, the AR client can further generate a corresponding digital representation of the obtained electronic certificate, then perform visual rendering on the digital representation based on the front-end AR engine of the AR client, augment the recognized facial feature and the digital representation, enhance display of the digital representation at the position corresponding to the recognized facial feature on the image scanning interface, and output a collection option on the digital representation.

The collection option can be a function button used to collect an electronic certificate corresponding to the digital representation. The user can trigger the function button through "tapping" to collect the electronic certificate corresponding to the digital representation, add the generated digital representation to a local display position corresponding to the electronic certificate, and then locally store the electronic certificate.

The digital representation generated by the AR client for the electronic certificate can corresponds to a type of the electronic certificate, in other words, different types of electronic certificates correspond to different digital representations. Content displayed on the digital representation is not limited. In addition, the display position provided by the AR client on the user interface can also correspond to the type of the electronic certificate. Different display positions can correspond to different types of electronic certificates.

In addition, after adding the generated digital representation to the corresponding display position, the AR client can further show, at the display position, the number of currently obtained electronic certificates corresponding to the display position. For example, the AR client can show a notification in an upper right corner of the display position. Furthermore, when the number of electronic certificates of a certain type changes, the AR client can update, based on the actual number of currently remaining electronic certificates, the number of electronic certificates that is marked at a display position corresponding to the electronic certificate.

In this example, the user can further share the obtained electronic certificate with another user.

In a shown implementation, the user can share the electronic certificate corresponding to the digital representation with the another user by triggering the digital representation added to the display position.

For example, when wanting to share an electronic certificate of a certain type, the user can trigger a display position corresponding to the electronic certificate by performing a trigger operation such as a tap operation, and can display a digital representation corresponding to the display position on the user interface after triggering the display position.

In this case, a sharing option can be provided on the digital representation. For example, when the electronic certificate is a virtual card, the sharing option can be a trigger option of "send one to a friend" trigger option. After the user triggers the trigger option by performing a predetermined trigger operation such as a tap operation, the AR client can output a selection interface of sharing method, and several types of target applications that can be selected by the user can be provided on the selection interface. In this case, the user can select a corresponding target application on the selection interface, and then further select a target user to be shared this time in the target application. When the selection is completed, the AR client can send the electronic certificate to the target user selected by the user.

When the user shares the electronic certificate with the target user, if the target user is a contact or a friend of the user in the AR client, the user can share the electronic certificate with the target user in the AR client. In this case, the AR client can transmit, by using the AR server, the electronic certificate that needs to be shared to an AR client of the target user.

Certainly, if the target user is not a contact or a friend of the user in the AR client, but is a contact or a friend of the user in a third-party client, the user can also share the electronic certificate with the target user by using the third-party client. In this case, the AR client can generate, by using the AR server, a corresponding access link for the electronic certificate that needs to be shared, and then share the generated access link with the target user by using the third-party client.

### (2) "Verification of the number of types of electronic certificates"

In this example, after the user collects the electronic certificate by using the two previously described collection methods, the AR client can further determine, in real time in the back end, whether the number of types of locally stored electronic certificates reaches the predetermined threshold. If the predetermined threshold is reached, the user can receive access to virtual red packet allocation. In this case, the AR client can send a red packet allocation request (equivalent to the virtual object allocation request) to the server, and add several electronic certificates to the red packet allocation request.

In a shown implementation, each of the number of electronic certificates included in the red packet allocation request and the number of types of electronic certificates included in the red packet allocation request can be the predetermined threshold, so that after receiving the red packet allocation request, the server can obtain the electronic certificate included in the red packet allocation request, and then perform verification.

It is worthwhile to note that an operation of sending the red packet allocation request to the AR server by the AR client can be manually triggered by the user, or can be automatically triggered when the AR client determines that the number of types of collected electronic certificates reaches a first quantity.

For example, in a case, when determining, in the back end, that the number of collected electronic certificates reaches the first quantity, the AR client can automatically initiate the red packet allocation request to the AR server. In another case, a trigger button used to trigger the AR client to initiate an object allocation request to the AR server can be provided at a display position corresponding to each electronic certificate. When determining, in the back end, that the number of collected electronic certificates reaches the predetermined threshold, the AR client can output a prompt to the user, to prompt the user that access to red packet allocation can be granted currently, and the AR client can send the red packet allocation request to the AR server in response to a trigger operation performed by the user on the trigger button.

In this example, the AR server verifies the number of types of electronic certificates included in the red packet allocation request sent by the AR client. If the AR server determines, after verifying the electronic certificate included in the red packet allocation request, that the number of types of electronic certificates included in the red packet allocation request reaches the predetermined threshold, the AR server can grant access to red packet allocation to the user, and immediately send a red packet of a certain amount of money to the user from a predetermined "red packet fund pool" (equivalent to the predetermined virtual object set) based on a predetermined allocation rule, or send a red packet of a certain amount of money to the user from a predetermined "red packet fund pool" based on a predetermined allocation rule after a specified red packet sending time arrives.

### (3) "Sending of a red packet"

In this example, the allocation rule used by the AR server to send the red packet to the user from the predetermined "red packet fund pool" can be formulated based on an actual service demand.

In a shown implementation, the AR server can count the number of users who have been granted access to red packet allocation, and calculate an average allocation quantity of total red packets to be sent in the "red packet fund pool" based on the counted quantity of users. In this case, the calculated average allocation quantity is the number of red packets that need to be sent to each user. In this case, the AR server can send a corresponding amount of red packet to each user from the "red packet fund pool" based on the calculated average allocation quantity.

In another shown implementation, when sending the red packet to the user, the AR server can alternatively randomly select a red packet of a certain amount of money from the "red packet fund pool". For example, the AR server can calculate a random number for the user based on a predetermined random algorithm with reference to a total amount of red packets to be sent in the "red packet fund pool", and then send a corresponding amount of red packet to the user based on the random number.

Certainly, in practice, another allocation rule different from the allocation rule shown above can be used. Implementations are not listed one by one in the present specification.

In this example, after successfully sending the red packet to the user, the AR server can further send an allocation result to the AR client of the user. After receiving the allocation result, the AR client can display the allocation result to the user.

The allocation result can include one or more pieces of information such as an amount of the sent red packet, a sender of the red packet, another receiver of the red packet, the number of other receivers, and an allocation rule of the red packet.

The following describes the technical solutions in the previous implementation in detail with reference to a specific application scenario.

In a shown red packet sending scenario of "collect five blessings for a prize", the AR client can be an ALIPAY client integrated with an AR service function. The AR server can be a payment platform that interconnects with the ALIPAY client and that is integrated with an AR service function. The virtual object set can be an enterprise fund account of an enterprise that cooperates with a payment platform, and a fund in the enterprise fund account is a total amount of funds that can be used by the enterprise to send a red packet to a user.

The electronic certificate can include five types of virtual blessing cards (including, for example, a "healthy blessing", a "friendly blessing", a "prosperous blessing", a "peaceful blessing", and a "wealthy blessing").

The user can scan the facial area of the user or the another user by using the AR client, and when the facial feature is recognized from the scanned image, trigger the AR server to send a virtual blessing card to the AR client.

In addition, the user can collect, by using the AR client, the virtual blessing card sent by the AR server, and correspondingly receive access to red packet acquisition after collecting the five types of virtual blessing cards, and the AR server sends a red packet to the user.

In the five types of virtual blessing cards, the payment platform can set a certain quantity of types of "rare" virtual blessing cards, for example, two types. Whether to send this type of "rare" virtual blessing cards depends on activeness of the user calculated by the payment platform based on data of the user, in other words, this type of "rare" virtual cards can be preferentially sent to a user with relatively high activeness. When sending a virtual blessing card to a common user, the payment platform can send only two or three types of cards in the five types of virtual blessing cards (including, for example, a "healthy blessing", a "friendly blessing", a "prosperous blessing", a "peaceful blessing", and a "wealthy blessing") to the user by default.

After the user completes image scanning on the facial area of the user or the another user under prompt of the face scanning prompt output on the image scanning interface shown in FIG. 2, the AR client can initiate face recognition for the scanned image, and when recognizing the facial feature from the scanned image, can enhance display of the corresponding dynamic picture at the position corresponding to the facial feature, to prompt the user that the facial feature is recognized.

After face recognition is completed, the AR server can determine, based on the recognition result, whether the facial feature is recognized from the image scanned by the AR client.

In an implementation, if the facial feature is recognized from the image scanned by the AR client, the AR server can directly send the virtual blessing card to the user by using the AR client.

In another implementation, based on face recognition, a gesture recognition mechanism or an expression recognition mechanism can be further introduced. After the facial feature is recognized from the image scanned by the AR client, the AR client can continue to output the gesture scanning prompt or the expression scanning prompt on the image scanning interface, to prompt the user to make the predetermined gesture or the predetermined expression, and initiate gesture recognition or expression recognition for the scanned image. After gesture recognition or expression recognition is completed, the AR server can determine, based on the recognition result, whether the predetermined gesture or the predetermined expression is recognized from the image scanned by the AR client. If the predetermined gesture or the predetermined expression is recognized from the image scanned by the AR client, the AR server can send the virtual blessing card to the user by using the AR client.

After the AR client receives the virtual blessing card sent by the AR server, display of the corresponding dynamic picture can be enhanced at the position corresponding to the facial feature, to prompt the user that the virtual blessing card is received.

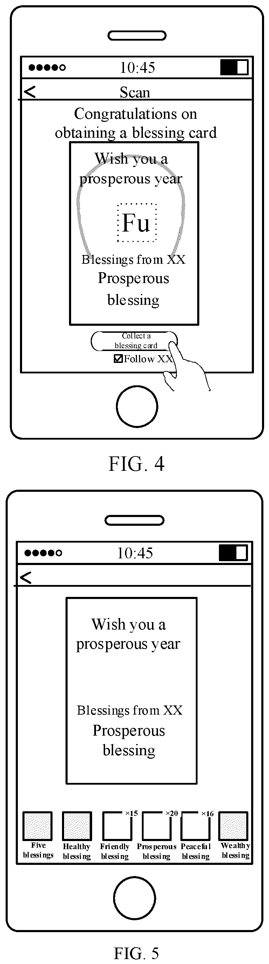

In addition, referring to FIG. 4, after receiving the virtual blessing card sent by the AR server, the AR client can perform, based on the front-end AR engine of the AR client, visual rendering on the virtual blessing card sent by the AR server, augment the recognized facial feature and the digital representation, enhance display of the digital representation at the position corresponding to the recognized facial feature on the image scanning interface (FIG. 4 shows that a virtual blessing card of "prosperous blessing" is displayed over the recognized facial area), and output a collection option on the digital representation.

In this example, the user can trigger a function button of "collect a blessing card" through tapping to trigger the AR client to display the digital representation on an activity interface. Content of digital representations generated by the client for different types of virtual cards is different from each other. The display position provided by the client can be in a one-to-one mapping relationship with a type of a virtual card, and each type of virtual card can correspond to one display position.

Referring to FIG. 5, the AR client can provide a display position for each of the five types of virtual blessing cards (including, for example, a "healthy blessing", a "friendly blessing", a "prosperous blessing", a "peaceful blessing", and a "wealthy blessing") on the user interface. After adding the digital representation to a corresponding display position, the client can further mark the number of currently obtained virtual cards at a predetermined position (an upper right corner shown in FIG. 5) of the display position, and when the number of virtual cards corresponding to the display position changes, the client can further update the number.

After successfully collecting the five types of virtual cards (including, for example, a "healthy blessing", a "friendly blessing", a "prosperous blessing", a "peaceful blessing", and a "wealthy blessing") by obtaining the virtual card sent by the payment platform and obtaining a virtual card shared by another friend, the user receives access to "five blessings" red packet acquisition.

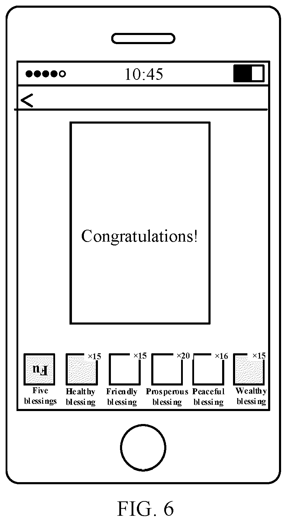

Referring to FIG. 6, the AR client can further provide a "five blessings" display position on the user interface. After the user successfully collects the five types of virtual cards (including, for example, a "healthy blessing", a "friendly blessing", a "prosperous blessing", a "peaceful blessing", and a "wealthy blessing"), the "five blessings" display position can be marked, for example, highlighted, to give a prompt that the user currently receives access to "five blessings" red packet acquisition.

After the user receives access to "five blessings" red packet acquisition, the user can manually trigger the "five blessings" display position to trigger the client to send the red packet allocation request to the payment platform, or the client automatically sends the red packet allocation request to the payment platform. In this case, the red packet allocation request can include the five types of collected virtual cards. After receiving the request, the payment platform can verify the types of virtual cards in the request. If the payment platform determines that the request includes the five types of virtual cards after verification, the payment platform can immediately send a "red packet" of a certain amount of money to the user from the enterprise fund account of the cooperative enterprise, or send a "red packet" of a certain amount of money to the user after a sending time arrives. For example, the payment platform can count the number of users who receive access to a "five blessings" red packet, and then equally allocate the amount of red packets that can be sent in the enterprise fund account.

After the user obtains the "red packet", the payment platform can push a red packet sending result to the client. After receiving the sending result, the client can display the sending result to the user on the activity interface.

Information displayed in the red packet sending result can include an amount obtained this time, a sender of the red packet (a name of the enterprise that cooperates with the payment platform), the total number of users who obtain the "five blessings" red packet this time, an allocation rule of the "five blessings" red packet, etc.

Corresponding to the previous method implementations, the present specification further provides apparatus implementations.

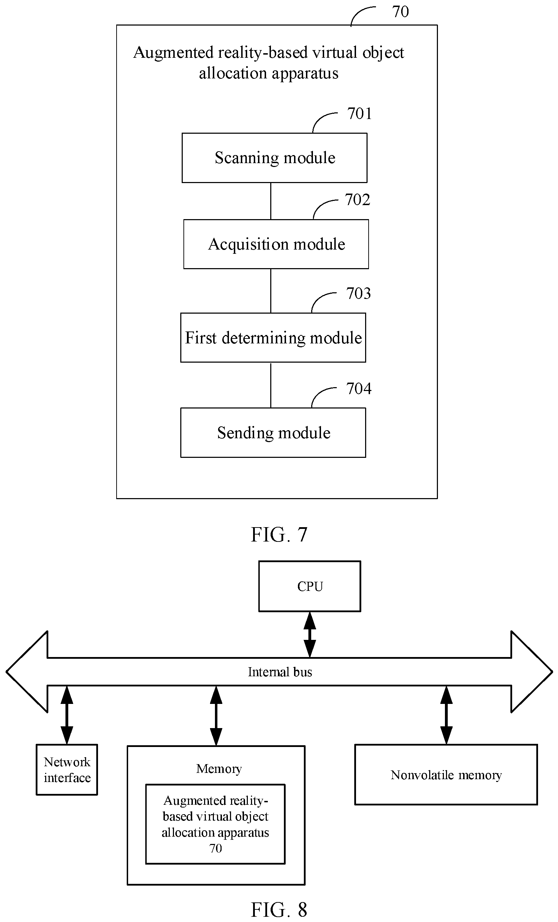

Referring to FIG. 7, the present specification provides an augmented reality-based virtual object allocation apparatus 70, applied to an AR client. Referring to FIG. 8, a hardware architecture of an AR end-user device in an AR client that includes the augmented reality-based virtual object allocation apparatus 70 usually includes a CPU, a memory, a nonvolatile memory, a network interface, an internal bus, etc. Software implementation is used as an example. The augmented reality-based virtual object allocation apparatus 70 usually can be understood as a logic apparatus that is generated as a result of running a computer program loaded in the memory by the CPU and that is of a combination of software and hardware. The apparatus 70 includes: a scanning module 701, configured to perform image scanning on a target user, and initiate face recognition for a scanned image; an acquisition module 702, configured to obtain, when a facial feature is recognized from the scanned image, an electronic certificate sent by an augmented reality server, and locally store the obtained electronic certificate, where the electronic certificate is used to obtain a virtual object; a first determining module 703, configured to determine whether the number of types of locally stored electronic certificates reaches a predetermined threshold; and a sending module 704, configured to send a virtual object allocation request to the augmented reality server if the number of types of locally stored electronic certificates reaches the predetermined threshold, where the virtual object allocation request includes electronic certificates whose number of types is the predetermined threshold, so that the augmented reality server allocates a virtual object from a predetermined virtual object set based on the virtual object allocation request.

In the present implementation, the acquisition module 702 is configured to: output gesture prompt information to a user when the facial feature is recognized from the scanned image, where the gesture prompt information is used to prompt the user to make a predetermined gesture; and initiate gesture recognition for the scanned image, and obtain, when the predetermined gesture is recognized from the scanned image, the electronic certificate sent by the augmented reality server.

In the present implementation, the acquisition module 702 is configured to: output expression prompt information to a user when the facial feature is recognized from the scanned image, where the expression prompt information is used to prompt the user to make a predetermined expression; and initiate expression recognition for the scanned image, and obtain, when the predetermined expression is recognized from the scanned image, the electronic certificate sent by the augmented reality server.

In the present implementation, the apparatus 70 further includes: a display module 705 (not shown in FIG. 7), configured to enhance display of a predetermined dynamic picture at a position corresponding to the facial feature when the facial feature is recognized from the scanned image and the electronic certificate sent by the augmented reality server is obtained.

In the present implementation, the virtual object is a virtual red packet.

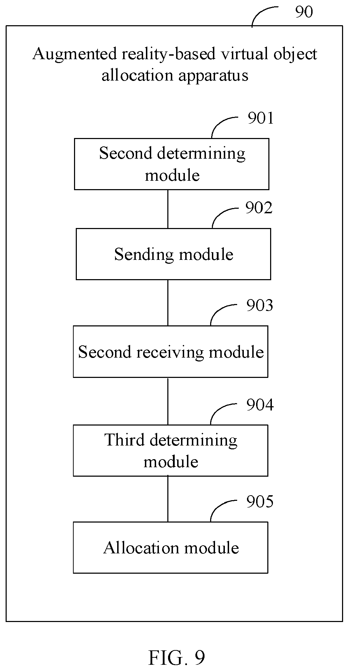

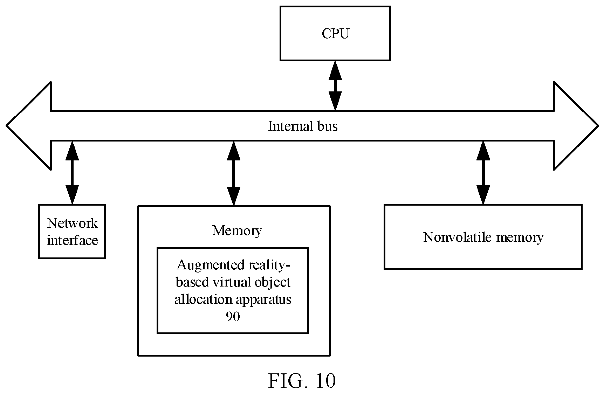

Referring to FIG. 9, the present specification provides an augmented reality-based virtual object allocation apparatus 90, applied to an AR server. Referring to FIG. 10, a hardware architecture in an AR server that includes the augmented reality-based virtual object allocation apparatus 90 usually includes a CPU, a memory, a nonvolatile memory, a network interface, an internal bus, etc. Software implementation is used as an example. The augmented reality-based virtual object allocation apparatus 90 usually can be understood as a logic apparatus that is generated as a result running a computer program loaded in the memory by the CPU and that is of a combination of software and hardware. The apparatus 90 includes: a second determining module 901, configured to determine, when an augmented reality client performs image scanning on a target user, whether a facial feature is recognized from an image scanned by the augmented reality client; a sending module 902, configured to send an electronic certificate to the augmented reality client if the facial feature is recognized from the scanned image, where the electronic certificate is used to obtain a virtual object; a receiving module 903, configured to receive an object allocation request sent by the augmented reality client, where the object allocation request includes several electronic certificates used to obtain a service object; a third determining module 904, configured to determine whether the number of types of electronic certificates included in the object allocation request reaches a predetermined threshold; and an allocation module 905, configured to allocate a virtual object to the augmented reality client from a predetermined virtual object set if the number of types of electronic certificates included in the object allocation request reaches the predetermined threshold.

In the present implementation, the sending module 902 is configured to further determine whether a predetermined gesture is recognized from the image scanned by the augmented reality client if the facial feature is recognized from the scanned image; and send the electronic certificate to the augmented reality client if the predetermined gesture is recognized from the image scanned by the augmented reality client.

In the present implementation, the sending module 902 is configured to further determine whether a predetermined expression is recognized from the image scanned by the augmented reality client if the facial feature is recognized from the scanned image; and send the electronic certificate to the augmented reality client if the predetermined expression is recognized from the image scanned by the augmented reality client.

In the present example, the sending module 902 is further configured to: send a predetermined dynamic picture to the augmented reality client, so that the augmented reality client enhances display of the dynamic picture at a position corresponding to the facial feature when the facial feature is recognized from the scanned image and the electronic certificate sent by the augmented reality server is obtained.

In the present implementation, the number of types of electronic certificates sent by the augmented reality server to the augmented reality client is less than the predetermined threshold.

In the present implementation, the virtual object is a virtual red packet.

An apparatus implementation basically corresponds to the method implementation. For related parts, references can be made to partial description in the method implementation. The previously described apparatus implementation is merely an example. The units described as separate parts may or may not be physically separate, and parts displayed as units may or may not be physical units, may be located in one position, or may be allocated on a plurality of network units. Some or all of the modules can be selected based on an actual demand to achieve the objectives of the solutions of the present specification. A person of ordinary skill in the art can understand and implement the implementations of the present specification without creative efforts.

The apparatus, module, or unit described in the previous implementations can be implemented by a computer chip or an entity, or can be implemented by a product with a certain function. A typical implement device is a computer. A specific form of the computer can be a personal computer, a laptop computer, a cellular phone, a camera phone, a smartphone, a personal digital assistant, a media player, a navigation device, an email transceiver device, a game console, a tablet computer, a wearable device, or any combination of any of these devices.

Corresponding to the method implementations, the present specification further provides an implementation of an electronic device. The electronic device includes a processor and a memory, configured to store a machine executable instruction. The processor and the memory are usually connected to each other by using an internal bus. In another possible implementation, the device can further include an external interface, to communicate with another device or component.

In the present implementation, by reading and executing the machine executable instruction that is stored in the memory and that corresponds to control logic of augmented reality-based virtual object allocation, the processor is promoted to perform the following operations: performing image scanning on a target user, and initiating face recognition for a scanned image; obtaining an electronic certificate sent by an augmented reality server when a facial feature is recognized from the scanned image, and locally storing the obtained electronic certificate, where the electronic certificate is used to obtain a virtual object; determining whether the number of types of locally stored electronic certificates reaches a predetermined threshold; and sending a virtual object allocation request to the augmented reality server if the number of types of locally stored electronic certificates reaches the predetermined threshold, where the virtual object allocation request includes electronic certificates whose number of types is the predetermined threshold, so that the augmented reality server allocates a virtual object from a predetermined virtual object set based on the virtual object allocation request.

In the present implementation, by reading and executing the machine executable instruction that is stored in the memory and that corresponds to the control logic of the augmented reality-based virtual object allocation, the processor is further promoted to perform the following operations: output gesture prompt information to a user when the facial feature is recognized from the scanned image, where the gesture prompt information is used to prompt the user to make a predetermined gesture; and initiating gesture recognition for the scanned image, and obtaining, when the predetermined gesture is recognized from the scanned image, the electronic certificate sent by the augmented reality server.

In the present implementation, by reading and executing the machine executable instruction that is stored in the memory and that corresponds to the control logic of the augmented reality-based virtual object allocation, the processor is further promoted to perform the following operations: output expression prompt information to a user when the facial feature is recognized from the scanned image, where the expression prompt information is used to prompt the user to make a predetermined expression; and initiating expression recognition for the scanned image, and obtaining, when the predetermined expression is recognized from the scanned image, the electronic certificate sent by the augmented reality server.

In the present implementation, by reading and executing the machine executable instruction that is stored in the memory and that corresponds to the control logic of the augmented reality-based virtual object allocation, the processor is further promoted to perform the following operations: enhancing display of a predetermined dynamic picture at a position corresponding to the facial feature when the facial feature is recognized from the scanned image and the electronic certificate sent by the augmented reality server is obtained.

In the present implementation, by reading and executing the machine executable instruction that is stored in the memory and that corresponds to the control logic of the augmented reality-based virtual object allocation, the processor is further promoted to perform the following operations: generating a corresponding digital representation of the obtained electronic certificate; outputting the generated digital representation to a user on an image scanning interface, where the digital representation includes a collection option corresponding to the electronic certificate; and adding the generated digital representation to a local display position corresponding to the electronic certificate in response to a trigger operation performed by the user for the collection option, where different digital representations are generated for different types of electronic certificates, and the different types of electronic certificates correspond to different display positions.

Corresponding to the method implementations, the present specification further provides an implementation of another electronic device. The electronic device includes a processor and a memory, configured to store a machine executable instruction. The processor and the memory are usually connected to each other by using an internal bus. In another possible implementation, the device can further include an external interface, to communicate with another device or component.

In the present implementation, by reading and executing the machine executable instruction that is stored in the memory and that corresponds to control logic of augmented reality-based virtual object allocation, the processor is promoted to perform the following operations: determining, when an augmented reality client performs image scanning on a target user, whether a facial feature is recognized from an image scanned by the augmented reality client; sending an electronic certificate to the augmented reality client if the facial feature is recognized from the scanned image, where the electronic certificate is used to obtain a virtual object; receiving an object allocation request sent by the augmented reality client, where the object allocation request includes several electronic certificates used to obtain a service object; determining whether the number of types of electronic certificates included in the object allocation request reaches a predetermined threshold; and allocating a virtual object to the virtual reality client from a predetermined virtual object set if the number of types of electronic certificates included in the object allocation request reaches the predetermined threshold.

In the present implementation, by reading and executing the machine executable instruction that is stored in the memory and that corresponds to the control logic of the augmented reality-based virtual object allocation, the processor is further promoted to perform the following operations: determining whether a predetermined gesture is recognized from the image scanned by the augmented reality client if the facial feature is recognized from the scanned image; and sending the electronic certificate to the augmented reality client if the predetermined gesture is recognized from the image scanned by the augmented reality client.

In the present implementation, by reading and executing the machine executable instruction that is stored in the memory and that corresponds to the control logic of the augmented reality-based virtual object allocation, the processor is further promoted to perform the following operations: determining whether a predetermined expression is recognized from the image scanned by the augmented reality client if the facial feature is recognized from the scanned image; and sending the electronic certificate to the augmented reality client if the predetermined expression is recognized from the image scanned by the augmented reality client.

In the present implementation, by reading and executing the machine executable instruction that is stored in the memory and that corresponds to the control logic of the augmented reality-based virtual object allocation, the processor is further promoted to perform the following operations: sending a predetermined dynamic picture to the augmented reality client, so that the augmented reality client enhances display of the dynamic picture at a position corresponding to the facial feature when the facial feature is recognized from the scanned image and the electronic certificate sent by the augmented reality server is obtained.

A person skilled in the art can easily figure out another implementation solution of the present specification after considering the specification and practicing the present invention disclosed here. The present specification is intended to cover any variations, uses, or adaptive changes of the present specification. These variations, uses, or adaptive changes follow general principles of the present specification, and include common knowledge or commonly used technical means that are not disclosed in the technical field of the present specification. The present specification and the implementations are merely considered as examples, and the actual scope and spirit of the present specification are pointed out by the following claims.

It should be understood that the present specification is not limited to the precise structures that have been described above and shown in the accompanying drawings, and various modifications and changes can be made without departing from the scope of the present specification. The scope of the present specification is limited only by the appended claims.

The previous descriptions are merely preferred implementations of the present specification, but are not intended to limit the present specification. Any modification, equivalent replacement, or improvement made without departing from the spirit and principle of the present specification shall fall within the protection scope of the present specification.

## Claims

1. An augmented reality-based virtual object allocation method, applied to an augmented reality client, wherein the method comprises:
performing image scanning on a target user, and initiating face recognition for a scanned image;
obtaining an electronic certificate sent by an augmented reality server when a facial feature is recognized from the scanned image, and locally storing the obtained electronic certificate, wherein the electronic certificate is used to obtain a virtual obj ect;
determining whether the number of types of locally stored electronic certificates reaches a predetermined threshold; and
sending a virtual object allocation request to the augmented reality server if the number of types of locally stored electronic certificates reaches the predetermined threshold, wherein the virtual object allocation request comprises electronic certificates whose number of types is the predetermined threshold, so that the augmented reality server allocates a virtual object from a predetermined virtual object set based on the virtual object allocation request.

2. The method according to claim 1, wherein the obtaining an electronic certificate sent by an augmented reality server when a facial feature is recognized from the scanned image comprises:
outputting gesture prompt information to a user when the facial feature is recognized from the scanned image, wherein the gesture prompt information is used to prompt the user to make a predetermined gesture; and
initiating gesture recognition for the scanned image, and obtaining, when the predetermined gesture is recognized from the scanned image, the electronic certificate sent by the augmented reality server.

3. The method according to claim 1, wherein the obtaining an electronic certificate sent by an augmented reality server when a facial feature is recognized from the scanned image comprises:
outputting expression prompt information to a user when the facial feature is recognized from the scanned image, wherein the expression prompt information is used to prompt the user to make a predetermined expression; and
initiating expression recognition for the scanned image, and obtaining, when the predetermined expression is recognized from the scanned image, the electronic certificate sent by the augmented reality server.

4. The method according to claim 1, further comprising:
enhancing display of a predetermined dynamic picture at a position corresponding to the facial feature when the facial feature is recognized from the scanned image and the electronic certificate sent by the augmented reality server is obtained.

5. The method according to claim 1, wherein the locally storing the obtained electronic certificate comprises:
generating a corresponding digital representation of the obtained electronic certificate;
outputting the generated digital representation to a user on an image scanning interface, wherein the digital representation comprises a collection option corresponding to the electronic certificate; and
adding the generated digital representation to a local display position corresponding to the electronic certificate in response to a trigger operation performed by the user for the collection option, wherein different digital representations are generated for different types of electronic certificates, and the different types of electronic certificates correspond to different display positions.

6. The method according to claim 1, wherein the virtual object is a virtual red packet.

7. An augmented reality-based virtual object allocation method, applied to an augmented reality server, wherein the method comprises:
determining, when an augmented reality client performs image scanning on a target user, whether a facial feature is recognized from an image scanned by the augmented reality client;
sending an electronic certificate to the augmented reality client if the facial feature is recognized from the scanned image, wherein the electronic certificate is used to obtain a virtual object;
receiving an object allocation request sent by the augmented reality client, wherein the object allocation request comprises several electronic certificates used to obtain a service object;
determining whether the number of types of electronic certificates comprised in the object allocation request reaches a predetermined threshold; and
allocating a virtual object to the virtual reality client from a predetermined virtual object set if the number of types of electronic certificates comprised in the object allocation request reaches the predetermined threshold.

8. The method according to claim 7, wherein the sending an electronic certificate to the augmented reality client if the facial feature is recognized from the scanned image comprises:
further determining whether a predetermined gesture is recognized from the image scanned by the augmented reality client if the facial feature is recognized from the scanned image; and
sending the electronic certificate to the augmented reality client if the predetermined gesture is recognized from the image scanned by the augmented reality client.

9. The method according to claim 7, wherein the sending an electronic certificate to the augmented reality client if the facial feature is recognized from the scanned image comprises:
further determining whether a predetermined expression is recognized from the image scanned by the augmented reality client if the facial feature is recognized from the scanned image; and
sending the electronic certificate to the augmented reality client if the predetermined expression is recognized from the image scanned by the augmented reality client.

10. The method according to claim 7, further comprising:
sending a predetermined dynamic picture to the augmented reality client, so that the augmented reality client enhances display of the dynamic picture at a position corresponding to the facial feature when the facial feature is recognized from the scanned image and the electronic certificate sent by the augmented reality server is obtained.

11. The method according to claim 7, wherein the number of types of electronic certificates sent by the augmented reality server to the augmented reality client is less than the predetermined threshold.

12. The method according to claim 7, wherein the virtual object is a virtual red packet.

13. An augmented reality-based virtual object allocation apparatus, applied to an augmented reality client, wherein the apparatus comprises:
a scanning module, configured to perform image scanning on a target user, and initiate face recognition for a scanned image;
an acquisition module, configured to obtain, when a facial feature is recognized from the scanned image, an electronic certificate sent by an augmented reality server, and locally store the obtained electronic certificate, wherein the electronic certificate is used to obtain a virtual object;
a first determining module, configured to determine whether the number of types of locally stored electronic certificates reaches a predetermined threshold; and
a sending module, configured to send a virtual object allocation request to the augmented reality server if the number of types of locally stored electronic certificates reaches the predetermined threshold, wherein the virtual object allocation request comprises electronic certificates whose number of types is the predetermined threshold, so that the augmented reality server allocates a virtual object from a predetermined virtual object set based on the virtual object allocation request.

14. The apparatus according to claim 13, wherein the acquisition module is configured to:
output gesture prompt information to a user when the facial feature is recognized from the scanned image, wherein the gesture prompt information is used to prompt the user to make a predetermined gesture; and
initiate gesture recognition for the scanned image, and obtain, when the predetermined gesture is recognized from the scanned image, the electronic certificate sent by the augmented reality server.

15. The apparatus according to claim 13, wherein the acquisition module is configured to:
output expression prompt information to a user when the facial feature is recognized from the scanned image, wherein the expression prompt information is used to prompt the user to make a predetermined expression; and
initiate expression recognition for the scanned image, and obtain, when the predetermined expression is recognized from the scanned image, the electronic certificate sent by the augmented reality server.

16. The apparatus according to claim 13, further comprising:
a display module, configured to enhance display of a predetermined dynamic picture at a position corresponding to the facial feature when the facial feature is recognized from the scanned image and the electronic certificate sent by the augmented reality server is obtained.

17. The apparatus according to claim 13, wherein the virtual object is a virtual red packet.

18. An augmented reality-based virtual object allocation apparatus, applied to an augmented reality server, wherein the apparatus comprises:
a second determining module, configured to determine, when an augmented reality client performs image scanning on a target user, whether a facial feature is recognized from an image scanned by the augmented reality client;
a sending module, configured to send an electronic certificate to the augmented reality client if the facial feature is recognized from the scanned image, wherein the electronic certificate is used to obtain a virtual object;
a receiving module, configured to receive an object allocation request sent by the augmented reality client, wherein the object allocation request comprises several electronic certificates used to obtain a service object;
a third determining module, configured to determine whether the number of types of electronic certificates comprised in the object allocation request reaches a predetermined threshold; and
an allocation module, configured to allocate a virtual object to the virtual reality client from a predetermined virtual object set if the number of types of electronic certificates comprised in the object allocation request reaches the predetermined threshold.

19. The apparatus according to claim 18, wherein the sending module is configured to:
further determine whether a predetermined gesture is recognized from the image scanned by the augmented reality client if the facial feature is recognized from the scanned image; and
send the electronic certificate to the augmented reality client if the predetermined gesture is recognized from the image scanned by the augmented reality client.

20. The apparatus according to claim 18, wherein the sending module is configured to:
further determine whether a predetermined expression is recognized from the image scanned by the augmented reality client if the facial feature is recognized from the scanned image; and
send the electronic certificate to the augmented reality client if the predetermined expression is recognized from the image scanned by the augmented reality client.

21. The apparatus according to claim 18, wherein the sending module is further configured to:
send a predetermined dynamic picture to the augmented reality client, so that the augmented reality client enhances display of the dynamic picture at a position corresponding to the facial feature when the facial feature is recognized from the scanned image and the electronic certificate sent by the augmented reality server is obtained.

22. The apparatus according to claim 18, wherein the number of types of electronic certificates sent by the augmented reality server to the augmented reality client is less than the predetermined threshold.

23. The apparatus according to claim 18, wherein the virtual object is a virtual red packet.

24. An electronic device, comprising:
a processor; and
a memory, configured to store a machine executable instruction, wherein
by reading and executing the machine executable instruction that is stored in the memory and that corresponds to control logic of augmented reality-based virtual object allocation, the processor is promoted to perform the following operations:
performing image scanning on a target user, and initiating face recognition for a scanned image;
obtaining, when a facial feature is recognized from the scanned image, an electronic certificate sent by an augmented reality server, and locally storing the obtained electronic certificate, wherein the electronic certificate is used to obtain a virtual object;
determining whether the number of types of locally stored electronic certificates reaches a predetermined threshold; and
sending a virtual object allocation request to the augmented reality server if the number of types of locally stored electronic certificates reaches the predetermined threshold, wherein the virtual object allocation request comprises electronic certificates whose number of types is the predetermined threshold, so that the augmented reality server allocates a virtual object from a predetermined virtual object set based on the virtual object allocation request.

25. An electronic device, comprising:
a processor; and
a memory, configured to store a machine executable instruction, wherein
by reading and executing the machine executable instruction that is stored in the memory and that corresponds to control logic of augmented reality-based virtual object allocation, the processor is promoted to perform the following operations:
determining, when an augmented reality client performs image scanning on a target user, whether a facial feature is recognized from an image scanned by the augmented reality client;
sending an electronic certificate to the augmented reality client if the facial feature is recognized from the scanned image, wherein the electronic certificate is used to obtain a virtual object;
receiving an object allocation request sent by the augmented reality client, wherein the object allocation request comprises several electronic certificates fused to obtain a service object;
determining whether the number of types of electronic certificates comprised in the object allocation request reaches a predetermined threshold; and
allocating a virtual object to the virtual reality client from a predetermined virtual object set if the number of types of electronic certificates comprised in the object allocation request reaches the predetermined threshold.
